# EUROPEAN PATENT APPLICATION

(11) **EP 0 950 916 A1**
(43) Date of publication of application: **20.10.1999**
(21) Application number: 99830202.0
(22) Date of filing: 08.04.1999
(51) Int. Cl.: G02C 9/00

(54) **System consisting of a spectacle frame and a support for protective sun lenses**

(30) Priority: 15.04.1998 IT FI980088
(71) Applicant: BOTTEGA D'ARTE IN FIRENZE S.R.L., 50136 Firenze (IT)
(72) Inventor: Fortini, Ilaria, 50141 Firenze (IT)
(74) Representative: Mannucci, Gianfranco, Dott.-Ing.

(57) **Abstract**

A description is given of a system comprising: a spectacle frame (1) with a pair of side bars (3), means of engaging a first pair of lenses (L1) and an intermediate bridge (9) between the lenses of said first pair, and a support (15) for a second pair of sum lenses (L2). The support comprises lateral retaining members (19) for the connection of the frame to the support, and an element (23) for the central connection of the support to the bridge.

## Description

### Technical Field

The present invention relates to a spectacle frame comprising a support for protective or filtering lenses, in other words sun lenses.

The invention relates in particular to a system consisting of a support for protective lenses and a spectacle frame; and also to the support for the protective lenses and the frame for connection to said support, considered separately.

### Background Art

There are at present various known devices for fitting protective sun lenses to spectacle frames, which enable the protective lenses to be removed from the visual field. In some of these systems, the protective lenses are fitted by means of suitable connections on the frame. In these devices, there is a contact between the connection means and the sight lenses fitted to the frame. This entails an evident risk of damage to the sight lenses, even when the connection systems are suitably protected. Moreover, the conventional systems have the disadvantage that the protective lenses can easily come into contact with the sight lenses. This frequently causes the migration of coloring substances from the protective lenses to the sight lenses, thus damaging the latter.

Conventional systems for mounting sun lenses on spectacles are particularly cumbersome, are difficult to use and have an inelegant appearance. Frequently, when the protective colored lens is to be removed from the visual field of the person wearing the frame, the colored lens has to be swung upward and remains attached to the spectacle frame in a position which is virtually orthogonal with respect to the sight lenses. This is not practical and, above all, is unattractive.

### Objects and Disclosure of the Invention

The object of the present invention is to provide a system which enables sun lenses, in other words protective lenses, to be mounted on a frame for sight-correcting spectacles, and which does not have the disadvantage of the conventional systems.

A particular object of the present invention is to provide a mounting system for practical use, which prevents contact between the protective lens and the sight lens and also avoids the risk of damaging the sight lenses as a result of the contact of the lenses with the means of connecting the sun lenses to the frame.

A further object of the present invention is to provide a system for mounting sun lenses which is particularly light and of attractive appearance, and which enables the corresponding frame for sight-correcting spectacles to be easily used even without the sun lenses.

These and further objects and advantages, which will be evident to persons skilled in the art from a reading of the following text, are achieved essentially by means of a system comprising: a spectacle frame with a pair of side bars and means of engaging a first pair of sight lenses and an intermediate bridge, and a support for a second pair of sun lenses, characterized in that the support for the sun lenses comprises lateral retaining members for the connection of the sight lens frame to the support, together with an element for the central connection of the support to the intermediate bridge of the frame.

These three connection points, which interact with the frame without touching the sight lenses, provide a simple, fast and secure mounting which does not damage the sight lenses and which, by suitable dimensioning, enables the sun lenses and the sight lenses to be kept sufficiently far apart to prevent contact between them.

In a particularly advantageous embodiment, the lateral retaining members comprise, on each side of the support, a pin and a corresponding eye, one being integral with the support and the other being integral with the frame. The pin can be inserted into the eye to fix the sun lens support to the frame. Preferably, the pins of the lateral retaining members are formed on the sun lens support, while the eyes are formed on the frame, but there is no reason why a reversed arrangement, with the pins integral with the frame and the eyes integral with the sun lens support, should not be used. The preferred configuration, with the pins integral with the support and the eyes integral with the frame, avoids the presence of projecting pins on the frame when this is used without the sun lens support. The eyes and the pins may be made from metal wire which forms, at least partially, the support of the protective lenses and the frame.

To achieve greater stability in conditions in which the frame is coupled to the support, it is advantageous to make each of the eyes of the lateral retaining member have a certain axial extension such that an approximately tubular socket is formed, in which the corresponding pin can be housed in a stable way while its oscillation is prevented. For this purpose, according to a particularly advantageous embodiment of the invention, the eyes are formed in practice from a plurality of superimposed helical turns, in the form of a coil spring. In this way a socket is formed with a sufficient axial extension to completely or virtually completely house the pin, which therefore does not project, or projects only to a limited extent, from the eye.

There is no reason why the eyes should not be made from corresponding tubes, for example tubes soldered to a structure forming the frame.

Preferably, the axes of the eyes and of the pins are positioned in such a way that the insertion movement takes place in the vertical direction, in other words orthogonally to the optical axis of the lenses.

The frame may be made in various ways, for example according to the description in EP-A-721134 or in WO-A-9743683. These frames of known types are made entirely from metal wire and in these it is easy to form, from the same wire as that which constitutes the frame, an eye or a coil spring in which the pin formed on the sun lens support can be inserted.

The pins may advantageously be made from the two ends of a length or portion of metal wire forming part of the rim of the protective sun lenses. This wire may also form the intermediate connecting bridge between the sun lenses, being suitably formed into a hook shape to engage with the bridge of the frame. This portion or length of metal wire may form the upper half-rim or the lower half-rim of the sun lenses. The remaining rim area of each sun lens may be completed, for example, with a nylon® thread, a metal wire whose diameter may be smaller than that of the length forming the intermediate bridge and the pins, or in another suitable way. It is also possible to provide a sun lens support which does not have rims around the sun lenses, but is made with elements which are used to form what is known as an à jour mounting of the sun lenses, in a way similar to that specified for the mounting of the lenses in the frame described in EP-A-721134.

Further advantageous characteristics of the system according to the invention, of the frame to be used in combination with the sun lens support, and of the sun lens support to be combined with the frame are indicated in the attached claims, which form an integral part of the present description.

### Brief Description of the Drawings

The invention will be more clearly understood from the description and the attached drawing, which shows practical and non-restrictive examples of the invention. More particularly,
Fig. 1 shows a perspective view of a system comprising a frame and a sun lens mounting support, in an intermediate phase of mounting on each other;
Fig. 2 is a view and partial section through I-I in Fig. 1;
Fig. 3 is a view similar to Fig. 2, in the mounted state;
Fig. 4 is a view from above through IV-IV in Fig. 3;
Fig. 5 is a section through the intermediate bridges of the frame and of the sun lens support;
Fig. 6 is a perspective view of a second embodiment of the invention;
Fig. 7 shows a detail through the line VII-VII of Fig. 6 in the mounted state; and
Fig. 8 shows a section through the bridges, in the mounted state, in the embodiment shown in Fig. 6.

### Detailed Description of the Preferred Embodiments of the Invention

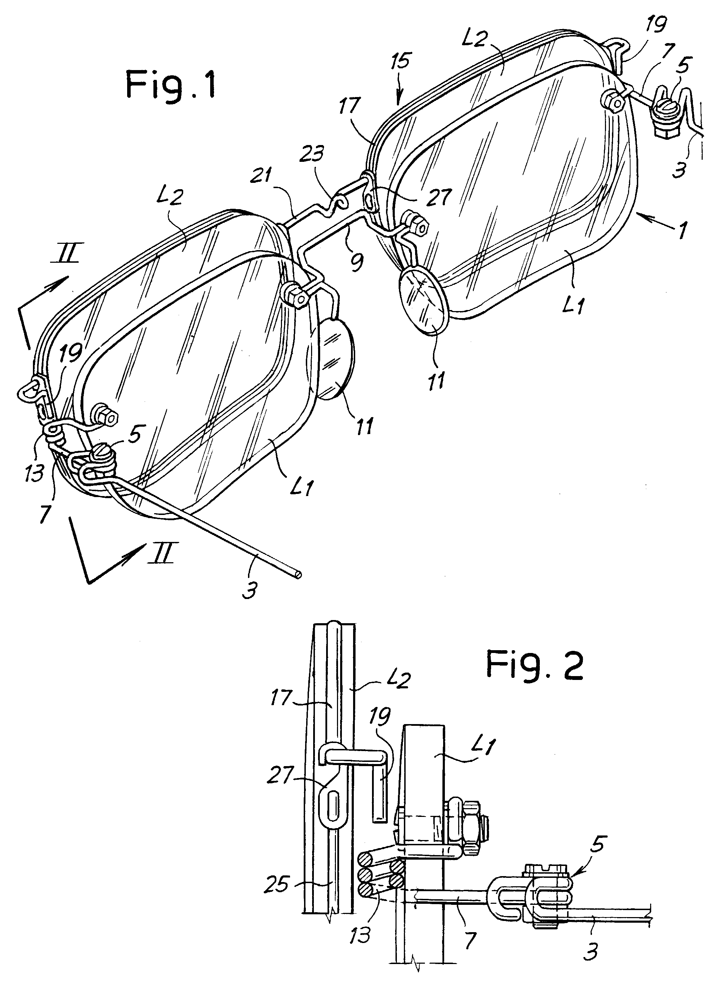

Figs. 1 to 5 show a first embodiment of the system consisting of a frame and a support for sun lenses, in other words protective filtering lenses, according to the invention. The number 1 indicates in a general way the spectacle frame with lenses L1. The frame comprises a pair of side bars 3 hinged by hinges 5 to front elements 7 for the connection of the lenses L1. The lenses are connected together by an intermediate bridge 9, to which are also fitted pads 11 for supporting the spectacles on the nose.

In this embodiment, the whole frame is made from metal wire, but this is not an essential condition.

The lengths of metal wire forming the connection elements 7 form, at the sides of the first pair of lenses L1, two eyes 13 (only one of which is visible in Fig. 1) formed from a plurality of adjacent helical turns, giving the appearance of a fully compressed coil spring. Each eye 13 is located between an end for fastening to the corresponding lens L1 and the corresponding hinge 5 for the side bar 3.

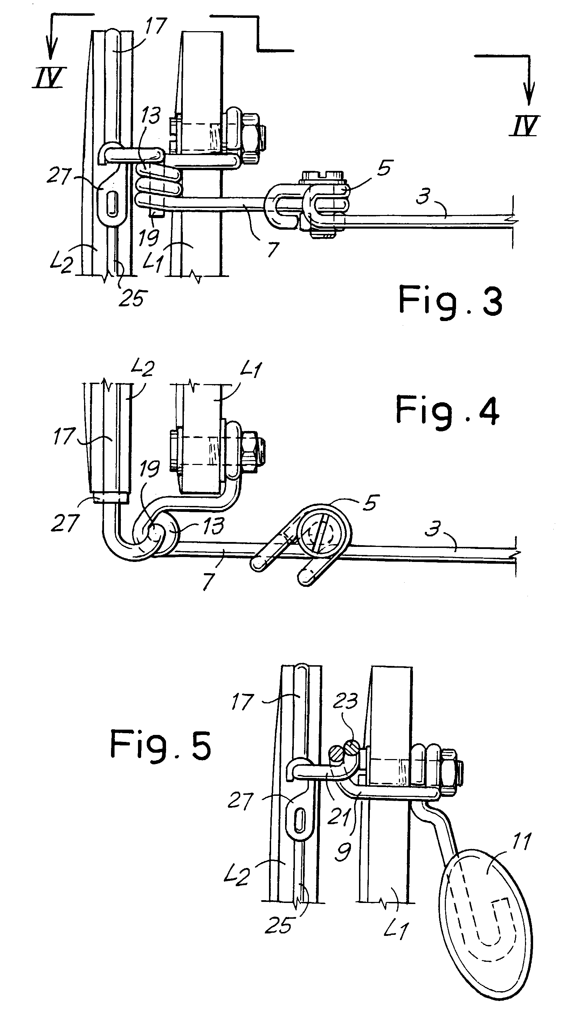

The number 15 indicates in a general way a support for a second pair of lenses L2 consisting of sun lenses, in other words protective lenses which are colored or in any case filtering. In the example shown in Figs. 1 to 5, the support 15 comprises a portion of metal wire 17 which runs round the top of each lens L2 and is terminated at its ends in pins 19 designed to be inserted into the eyes 13 formed by the connection elements 7 of the frame 1, as shown in particular in Figs. 1 to 4. The wire 17 is housed in edge grooves formed on the sun lenses L2. It also forms an intermediate bridge 21 having a hook 23 which engages with the intermediate bridge 9 of the frame 1, as shown in particular in Fig. 5. The hook 23 could also be formed on the bridge 9 of the frame 1, but this would adversely affect the attractive appearance of the frame, which may be used frequently without the protective lenses L2.

In the illustrated example, each lens L2 is mounted not only by means of the portion of wire 17, but also by means of two lower thinner threads, made for example from nylon®, indicated by 25 and forming the lower portion of the rim of each sun lens L2. The number 27 (see in particular Figs. 2 and 3) indicates connecting elements for fixing each nylon thread 25 to the metal wire 17 above it.

When the frame 1 with the lenses L1 is to be used without the sun protection, the support 15 is removed and the appearance of the spectacles is substantially identical to that of conventional spectacles, with the sole exception of the presence of the lateral eyes 13 forming part of the lateral retaining members of the support 15 of the sun lenses L2. These eyes 13 are of very limited size and do not adversely affect the appearance of the frame.

When the sun lenses L2 are to be combined with the sight lenses L1, the following procedure is carried out: one of the pins 19 is inserted into the corresponding eye 13. The insertion takes place from the top downward. The support is then inclined to make the hook 23 formed by the intermediate bridge 21 engage from below with the intermediate bridge 9 of the frame 1. Finally, with a slight elastic deformation of the support 15, the one of the two pins 19 which has not yet been inserted into the corresponding eye 13 is located above its eye and is inserted into it.

In this way, the support 15 with the sun lenses L2 is made to be coupled in a stable way to the frame 1 by means of the two lateral retaining members consisting of the eyes 13 and the pins 19, and by means of the hook 23 formed by the intermediate bridge 21 which engages with the intermediate bridge 9 of the frame. As may be seen in Figs. 3, 4 and 5 in particular, the sun lenses L2 are thus kept at a suitable distance from the sight lenses L1, preventing any contact between them and consequently preventing a migration of coloring substance from the lenses L2 to the lenses L1. Moreover, all the mounting operations take place without any contact between the support 15, with the corresponding lenses L2, and the sight lenses L1, so that the latter are not damaged in any way.

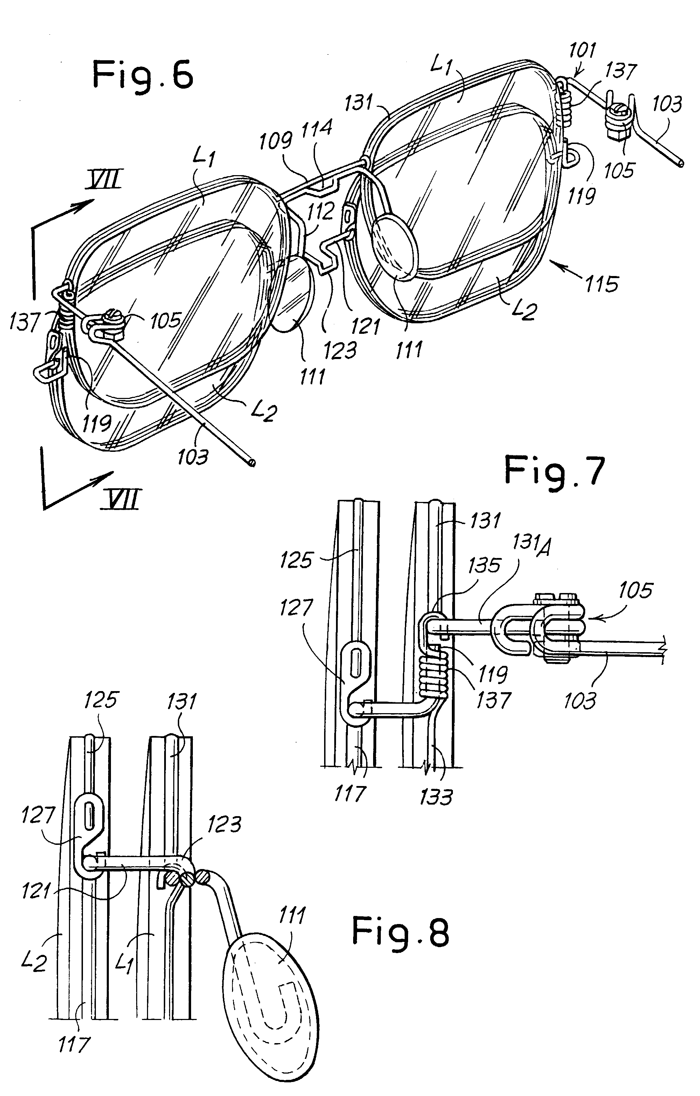

Figs. 6 to 8 show a second embodiment of the frame and support system according to the invention. The frame, indicated in a general way by 101, has side bars 103 hinged at 105 to a front portion of the frame, in which sight lenses L1 are inserted. The front portion of the frame which retains the lenses L1 comprises an upper metal wire 131 which forms rim means around the lenses and which also forms an intermediate bridge 109. The lenses are rimmed below by corresponding wires 133, for example metal wires, whose diameter is preferably smaller than that of the wire 131. The wires 133 engage with the wire 131 by means of hooks 135 with the interposition of an elastic element formed by a coil spring 137 which may be formed from the same wire 133 or which may be a mechanically separate element interposed between the wire 133 and the wire 131. Each hook 135 engages with an extension 131A of the wire 131 which also forms part of the hinge 105 for hinging the corresponding side bar 103.

The number 115 indicates in a general way the support of protective sun lenses L2. In this case, the support 115 is formed by a metal wire 117 which forms a lower portion of the rim of the sun lenses L2 and an intermediate bridge 121 forming a hook 123 for engagement with the bridge 109 of the frame 101. The upper part of each rim of the lenses L2 is formed by a thread of smaller diameter, made for example from nylon®, indicated by the number 125 and engaged with the wire 117 by means of hooks 127.

In the illustrated example, the pads 111 for support on the nose are carried by a bridge-shaped element 112 soldered to the bridge 109 and having a central bend which forms, together with the bridge 109, a socket 114 into which is inserted the hook 103 formed by the bridge 121 of the support 115 of the sun lenses L2.

In this embodiment, the lateral pins 119 formed by the metal wire 117 are inserted axially into the eyes formed by the turns of the coil springs 137. The mounting is carried out in a similar way to that described for the embodiment in Figs. 1 to 5, with the difference that the pins 119 are inserted from the bottom upward, while the hook 123 is engaged from the top downward on the bridge 109.

It is to be understood that the drawing shows only an example provided solely as a practical demonstration of the invention, and that this invention may vary in its forms and arrangements without departure from the scope of the guiding concept of the invention.

## Claims

1. A system comprising: a spectacle frame with a pair of side bars, means of engaging a first pair of lenses and an intermediate bridge between the lenses of said first pair, and a support for a second pair of sun lenses, characterized in that said support comprises lateral retaining members for the connection of said frame to said support, and an element for the central connection of the support to said bridge.

2. The system as claimed in claim 1, characterized in that the lateral retaining members comprise means in the form of pins and eyes, where the pins can be inserted into the eyes, and a hook between the intermediate bridge of the frame and an intermediate bridge of the sun lens support.

3. The system as claimed in claim 2, characterized in that said eyes have an axial extension to form an approximately tubular socket for said pins.

4. The system as claimed in claim 2 or 3, characterized in that said pins and said eyes have axes approximately orthogonal to the optical axes of the lenses.

5. The system as claimed in one or more of the preceding claims, characterized in that said frame and said support are made at least partially from metal wire.

6. The system as claimed in claims 2 and 5, characterized in that the eye of each of said retaining members is formed by a plurality of superimposed helical turns, forming a socket for the insertion of the corresponding pin.

7. The system as claimed in one or more of claims 2 to 6, characterized in that said eyes are formed on the frame and the pins are formed on the sun lens support.

8. The system as claimed in claim 7, characterized in that said eyes consist of turns of a metal wire which also form means of engaging the first pair of lenses.

9. The system as claimed in claims 2 and 5, characterized in that said eyes consist of a metal wire which also forms elements for connecting the side bars to the lenses.

10. The system as claimed in claims 2 and 5, characterized in that said eyes consist of coil springs forming part of a retaining rim of the first pair of lenses.

11. The system as claimed in claim 5, characterized in that said pins are formed by the ends of a portion of metal wire forming part of a rim of the sun lenses.

12. The system as claimed in claim 11, characterized in that said portion of metal wire also forms the intermediate connecting bridge between the lenses of the second pair of lenses, formed into a hook shape to engage with the intermediate bridge of said frame.

13. The system as claimed in claim 11 or 12, characterized in that said pins extend downward from a portion of metal wire which runs round the upper part of the second pair of sun lenses, the hook formed by the intermediate connecting bridge of the lenses of said second pair being orientated upward.

14. The system as claimed in claim 13, characterized in that the lower parts of the lenses of said second pair have corresponding rim wires, connected to the upper portion of metal wire at the positions of said pins, running round them.

15. The system as claimed in claim 11 or 12, characterized in that said pins extend upward from a portion of metal wire which runs round the lower parts of the lenses of said second pair, the hook formed by the intermediate connecting bridge of the lenses of said second pair being orientated downward.

16. The system as claimed in claim 15, characterized in that the upper parts of the lenses of said second pair have corresponding rim wires, connected to the lower portion of metal wire at the positions of said pins, running round them.

17. A spectacle frame comprising a pair of side bars, means of engaging a pair of lenses, and an intermediate bridge, characterized in that it has lateral eyes for the insertion of pins of a support for sun lenses.

18. The frame as claimed in claim 17, characterized in that said eyes have an axial extension to form an approximately tubular socket.

19. The frame as claimed in claim 17 or 18, wherein said eyes consist of lengths of metal wire forming corresponding connecting elements between the lenses and the side bars.

20. The frame as claimed in claim 18 or 19, wherein said eyes are formed by a plurality of superimposed helical turns.

21. The frame as claimed in claim 17, wherein said eyes consist of coil springs forming part of a rim of the lenses.

22. The frame as claimed in one or more of claims 17 to 21, wherein said eyes have an axis approximately orthogonal to the optical axis of the lenses.

23. A support for sun lenses which can be combined with a spectacle frame, comprising mounting means for the sun lenses, a pair of lateral pins designed to interact with eyes of a frame, and an intermediate bridge forming a member for connection to the corresponding intermediate bridge of said frame.

24. The support as claimed in claim 23, comprising a metal wire forming said pins, said intermediate bridge and at least a partial rim for the sun lenses.
